(19) Europäisches Patentamt
European Patent Office
Office européen des brevets

(11) Veröffentlichungsnummer: **0 253 377 A2**

(12) # EUROPÄISCHE PATENTANMELDUNG

(21) Anmeldenummer: 87110221.6

(51) Int. Cl.4: C08L 83/04

(22) Anmeldetag: 15.07.87

(30) Priorität: 17.07.86 DE 3624206

(43) Veröffentlichungstag der Anmeldung: 20.01.88 Patentblatt 88/03

(84) Benannte Vertragsstaaten: AT BE CH DE ES FR GB IT LI NL SE

(71) Anmelder: WACKER-CHEMIE GMBH
Prinzregentenstrasse 22
D-8000 München 22(DE)

(72) Erfinder: Bosch, Erhard, Dr.
Bruckner Strasse 43
D-8263 Burghausen(DE)
Erfinder: Neuhauser, Franz
Goldbrunn 1
A-5132 Geretsberg(AT)
Erfinder: Schiller, August, Dr.
Göllstrasse 22
D-8265 Neuötting(DE)
Erfinder: Sommer, OSwin, Dr.
Haydn Strasse 12
D-8263 Burghausen(DE)

(54) **Unter Ausschluss von Wasser lagerfähige, bei Zutritt von Wasser bei Raumtemperatur zu Elastomeren vernetzende Massen.**

(57) Unter Ausschluß von Wasser lagerfähige, bei Zutritt von Wasser bei Raumtemperatur zu Elastomeren vernetzende Massen, die durch Vermischen von in den endständigen Einheiten je eine Si-gebundene Hydroxylgruppe aufweisendem Diorganopolysiloxan mit Silan, an dessen Siliciumatom Stickstoff, zwei einwertige Kohlenwasserstoffreste, die durch eine Alkoxygruppe substituiert sein können, über Sauerstoff und über Kohlenstoff ein Kohlenwasserstoffrest gebunden sind, sowie gegebenenfalls mindestens einem weiteren Stoff hergestellt worden sind, wobei als Silan der vorstehend definierten Art cyclisches Silan der Formel

$$(R^1O)_2Si\overset{R^2}{N}R,$$

worin R einen zweiwertigen Kohlenwasserstoffrest, $R^1$ gleiche oder verschiedene, einwertige Kohlenwasserstoffreste, die durch eine Alkoxygruppe substituiert sein können, und $R^2$ Wasserstoff, einen Alkyl-oder Aminoalkylrest bedeutet, verwendet worden ist.

EP 0 253 377 A2

# Unter Ausschluß von Wasser lagerfähige, bei Zutritt von Wasser bei Raumtemperatur zu Elastomeren vernetzende Massen

Aus US 4424 157 (ausgegeben 3. Januar 1984, R.H. Chung, General Electric Co.) sind bereits unter Ausschluß von Wasser lagerfähige, bei Zutritt von Wasser bei Raumtemperatur zu Elastomeren vernetzende Massen bekannt, die durch Vermischen von in den endständigen Einheiten je eine Si-gebundene Hydroxylgruppe aufweisendem Diorganopolysiloxan mit Silan, an dessen Siliciumatom Stickstoff, zwei einwertige Kohlenwasserstoffreste über Sauerstoff und über Kohlenstoff ein einwertiger Kohlenwasserstoffrest gebunden sind, sowie gegebenenfalls mindestens einem weiteren Stoff hergestellt worden sind.

Es ist Aufgabe der Erfindung, unter Ausschluß von Wasser lagerfähige, bei Zutritt von Wasser bei Raumtemperatur zu Elastomeren vernetzende Massen bereitzustellen, die durch Vermischen von in den endständigen Einheiten je eine Si-gebundene Hydroxylgruppe aufweisendem Diorganopolysiloxan mit verhältnismäßig leicht zugänglichem Silan, an dessen Siliciumatom Stickstoff, zwei einwertige Kohlenwasserstoffreste, die durch eine Alkoxygruppe substituiert sein können, über Sauerstoff und über Kohlenstoff ein Kohlenwasserstoffrest gebunden sind, sowie gegebenenfalls mindestens einem weiteren Stoff hergestellt worden sind, die auch nach längerer Lagerung rasch vernetzen und Elastomere ergeben, die auch ohne vorhergehende Grundierung auf vielen Unterlagen auf denen sie erzeugt wurden, ausgezeichnet haften. Diese Aufgabe wird durch die Erfindung gelöst.

Gegenstand der Erfindung sind unter Ausschluß von Wasser lagerfähige, bei Zutritt von Wasser bei Raumtemperatur zu Elastomeren vernetzende Massen, die durch Vermischen von in den endständigen Einheiten je eine Si-gebundene Hydroxylgruppe aufweisendem Diorganopolysiloxan mit Silan an dessen Siliciumatom Stickstoff, zwei einwertige Kohlenwasserstoffreste, die durch eine Alkoxygruppe substituiert sein können, über Sauerstoff und über Kohlenstoff ein Kohlenwasserstoffrest gebunden sind, sowie gegebenenfalls mindestens einem weiteren Stoff hergestellt worden sind, dadurch gekennzeichnet, daß als Silan der vorstehend definierten Art cyclisches Silan der Formel

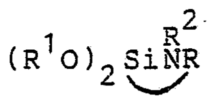

worin R einen zweiwertigen Kohlenwasserstoffrest, $R^1$ gleiche oder verschiedene,einwertige Kohlenwasserstoffreste, die durch eine Alkoxygruppe substituiert sein können, und $R^2$ Wasserstoff, einen Alkyl-oder Aminoalkylrest bedeutet, verwendet worden ist.

Als in den endständigen Einheiten je eine Si-gebundene Hydroxylgruppe aufweisende Diorganopolysiloxane können auch bei der Herstellung der erfindungsgemäßen Massen die gleichen in den endständigen Einheiten je eine Si-gebundene Hydroxylgruppe aufweisenden Diorganopolysiloxane verwendet werden, die bisher zur Herstellung von unter Ausschluß von Wasser lagerfähigen, bei Zutritt von Wasser bei Raumtemperatur zu Elastomeren vernetzenden Massen durch Vermischen von in den endständigen Einheiten je eine Si-gebundene Hydroxylgruppe aufweisendem Diorganopolysiloxan mit einer je Molekül mindestens 3 kondensationsfähige Gruppen aufweisenden Siliciumverbindung, wie Methyltris-(ketoxim)-silan oder den eingangs definierten Silanen gemäß US 4424 157, verwendet werden konnten. Die bisher meist dafür verwendeten und auch bei der Herstellung der erfindungsgemäßen Massen bevorzugt eingesetzten, in den endständigen Einheiten je eine Si-gebundene Hydroxylgruppe aufweisenden Diorganopolysiloxane können z.B. durch die Formel

$$HO(SiR^3{}_2O)_mSiR^3{}_2OH$$

wiedergegeben werden, wobei $R^3$gleiche oder verschiedene, einwertige, SiC-gebundene organische Reste und m eine ganze Zahl im Wert von mindestens 10 bedeutet.

Innerhalb der bzw. entlang den Siloxanketten der vorstehend angegebenen Formel, können, was durch derartige Formeln üblicherweise nicht dargestellt wird, zusätzlich zu den Diorganosiloxaneinheiten ($SiR^3{}_2O$) noch andere Siloxaneinheiten vorliegen. Beispiele für solche anderen, meist jedoch lediglich als mehr oder weniger schwer vermeidbare Verunreinigungen vorliegende Siloxaneinheiten sind solche der Formeln $R^3SiO_{3/2}$, $R^3_3SiO_{1/2}$ und $SiO_{4/2}$, wobei $R^3$ jeweils die oben dafür angegebene Bedeutung hat. Vorzugsweise beträgt jedoch die Menge an solchen anderen Siloxaneinheiten als Diorganosiloxaneinheiten insgesamt höchstens 2 Mol-% der in den Si-gebundene Hydroxylgruppen aufweisenden Diorganopolysiloxane vorliegenden Siloxaneinheiten.

Beispiele für Reste $R^3$ sind insbesondere Kohlenwasserstoffreste mit 1 bis 18 Kohlenstoffatomen je Rest, wie lineare oder verzweigte Alkylreste, z.B. der Methyl-, Ethyl-, n-Propyl-, Isopropyl-, n-Butyl-,sec-Butyl-und 2-Ethylhexylrest sowie Octadecylreste; Cycloalkylreste, z.B. der Cyclohexylrest und Methylcyclohexylreste; lineare oder verzweigte, aus Kohlenstoff und Wasserstoff als einzigen Atomen aufgebaute Kohlenwasserstoffreste mit mindestens einer aliphatischen Kohlenstoff-Kohlenstoffdoppelbindung, z.B. der Vinyl-, Allyl-und Methallylrest; Arylreste, z.B. der Phenylrest und Xenylreste; Alkarylreste z.B. Tolylreste; und Aralkylreste, z.B. der beta-Phenylethylrest.

Weitere Beispiele für Reste $R^3$ sind lineare oder verzweigte oder cyclische substituierte Kohlenwasserstoffreste,wie halo genierte Kohlenwasserstoffreste, z.B. der 3,3,3-Trifluorpropylrest und Chlorphenylrest; und Cyanalkylreste, z.B. der beta-Cyanethylrest. Vorzugsweise sind schon wegen der leichteren Zugänglichkeit mindestens 90 % der Anzahl der SiC-gebundenen Reste in den Diorganopolysiloxanen mit Hydroxylgruppen in den endständigen Einheiten und damit auch der Reste $R^3$ in der oben angegebenen Formel Methylreste.

Bei den in den endständigen Einheiten je eine Si-gebundene Hydroxylgruppe aufweisenden Diorganopolysiloxanen kann es sich um gleiche oder verschiedene Homo-oder Mischpolymerisate handeln, wobei die einzelnen Moleküle gleiche oder verschiedene Kettenlängen aufweisen können.

Die durchschnittliche Vikosität vom in den endständigen Einheiten je eine Si-gebundene Hydroxylgruppe aufweisendem Diorganopolysiloxan beträgt vorzugsweise 500 bis $1 \times 10^6$ mPa • s bei 25° C.

Vorzugsweise bedeutet R einen zweiwertigen aliphatischen Kohlenwasserstoffrest, insbesondere einen von aliphatischen Kohlenstoff-Kohlenstoff-Doppelbindungen freien Kohlenwasserstoffrest mit 1 bis 10 Kohlenstoffatomen je Rest, wie einen Rest der Formel

$-(CH_2)_3-$
$-(CH_2)_4-$
$-(CH_2)_5-$
$-(CH_2)_6-$
$-CH_2CH(CH_3)CH_2-$
$-CH_2CH(C_2H_5)(CH_2)_2-$

Wie schon aus den vorstehend angegebenen Formeln ersichtlich, können die Reste R geradkettig oder verzweigt sein.

Besonders bevorzugt als Rest R ist jedoch der Rest der Formel

$-(CH_2)_3-$,

Vorzugsweise enthalten die Reste $R^1$ höchstens 1 bis 6 Kohlenstoffatome je Rest und sind geradkettige oder verzweigte Alkylreste, wie der Methyl-, Ethyl-, n-Propyl-, Isopropyl-, n-Butyl-und sec.-Butylrest sowie Pentylreste.

$R^1$ kann aber auch z.B. ein Phenylrest sein. Ein Beispiel für einen durch eine Alkoxygruppe substituierten Kohlenwasserstoffrest, wobei durch eine Alkoxygruppe substituierte Alkylgruppen bevorzugt sind, ist der Rest der Formel

$CH_3O(CH_2)_2-$

Auch die Alkyl-und Aminoalkylreste $R^2$ können linear, verzweigt oder cyclisch sein. Die oben angegebenen Beispiele für Alkylreste $R^1$ gelten im vollen Umfang auch für die Alkylreste $R^2$. Ein weiteres und wichtiges Beispiel für einen Rest $R^2$ ist der Cyclohexylrest.
Beispiele für Aminoalkylreste sind solche der Formel

$H_2N(CH_2)_2-$
$H_2N(CH_2)_3-$
$(CH_3)_2N(CH_2)_2-$

Einzelne Beispiele für Silane der Formel

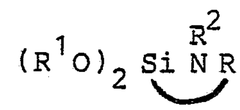

sind solche der Formel

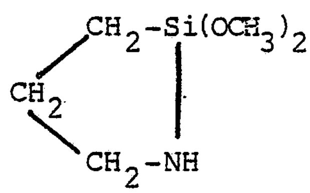

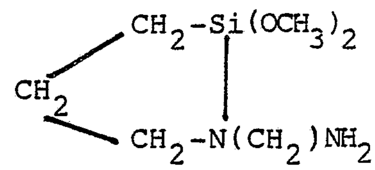

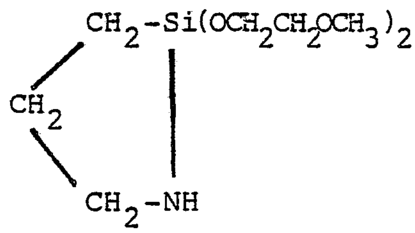

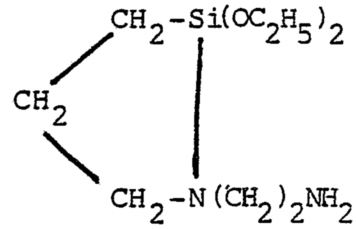

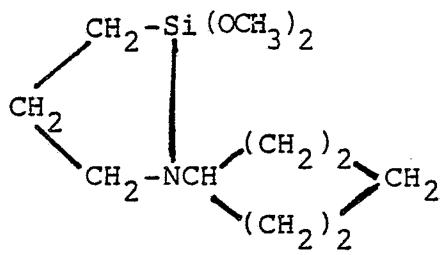

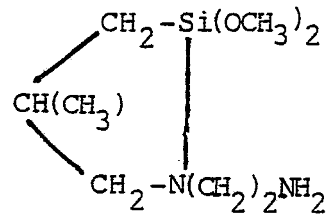

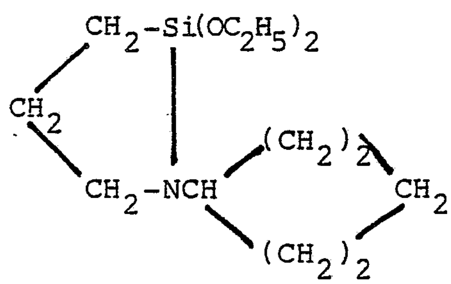

Die Herstellung von Silanen der erfindungsgemäß verwendeten Art ist bekannt. Sie kann beispielsweise durch Erwärmen eines Silans der Formel

$(R^1O)_3SiRNHR^2$,

worin R, $R^1$ und $R^2$ jeweils die oben dafür angegebene Bedeutung haben, auf über 100° C, vorzugsweise auf Temperaturen bei oder nahe dem Siedepunkt des jeweils eingesetzten Silans erfolgen. Gegebenenfalls kann während der Umsetzung der Alkohol der Formel $R^1O$ H im Maße seiner Bildung abdestilliert werden. Dieses Verfahren zur Herstellung von Silanen der erfindungsgemäß verwendeten Art ist aus US 3146250 (ausgegeben 25. August 1964, J.L. Speier) bekannt.

Es kann eine Art von Silan der erfindungsgemäß verwendeten Art, kann aber auch ein Gemisch aus mindestens zwei verschiedenen Arten derartiger Silane zur Herstellung der erfindungsgemäßen Massen verwendet werden. Vorzugsweise werden die Silane der erfindungsgemäß verwendeten Art in Mengen von 2 bis 20 Gew.-%, insbesondere in Mengen von 3 bis 10 Gew.-%, jeweils bezogen auf das Gesamtgewicht der jeweiligen Masse, eingesetzt.

Beispiele für weitere Stoffe, die bei der Bereitung der erfindungsgemäßen Massen mitverwendet werden können,sind Silane der Formel

$$R^3_n\ Si(OR^1)_{4-n},$$

worin $R^1$ und $R^3$ jeweils die oben dafür angegebene Bedeutung haben und n, 0 oder 1 ist, oder deren Teilhydrolysate, wie Hexamethoxydisiloxan, Kondensationskatalysatoren, verstärkende anorganische Füllstoffe, nicht-verstärkende anorganische Füllstoffe, Pigmente, lösliche Farbstoffe, Riechstoffe, Weichmacher,wie bei Raumtemperatur flüssige, durch Trimethylsiloxygruppen endblockierte Dimethylpolysiloxane oder Phosphorsäureester, Fungicide, harzartige Organopolysiloxane, einschließlich solcher aus $(CH_3)_3\ SiO_{1/2}$ -und $SiO_{4/2}$-Einheiten, rein-organische Harze, wie Homo-oder Mischpolymerisate des Acrylnitrils, Styrols, Vinylchlorids oder Propylens, wobei solche rein-organischen Harze, insbesondere Mischpolymerisate aus Styrol und n-Butylacrylat, bereits in Gegenwart vom in den endständigen Einheiten je eine Si-gebundene Hydroxylgruppe aufweisendem Diorganopolysiloxan durch Polymerisation der genannten Monomeren mittels freier Radikale er zeugt worden sein können, Korrosionsinhibitoren, Polyglykole, die verestert und/oder verethert sein können, Oxydationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, sowie zellenerzeugende Mittel, z.B. Azodicarbonamid.

Als Kondensationskatalysatoren können die erfindungsgemäßen Massen beliebige Kondensationskatalysatoren enthalten, die auch bisher in unter Ausschluß von Wasser lagerfähigen, bei Zutritt von Wasser bei Raumtemperatur zu Elastomeren vernetzenden Massen, die durch Vermischen von in den endständigen Einheiten je eine Si-gebundene Hydroxylgruppe aufweisendem Diorganopolysiloxan mit Silan, an dessen Siliciumatom mindestens drei Kohlenwasserstoffreste, die durch eine Alkoxygruppe substituiert sein können, über Sauerstoff gebunden sind, oder dessen Oligomer,hergestellt worden sind, vorliegen konnten. Dazu gehören alle in der eingangs genannten US 4424 157 erwähnten Kondensationskatalysatoren. Bevorzugt unter diesen Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung

≡SiOSn≡

bzw. durch SnC-gebundene , einwertige organische Reste abgesättigt sind. Die Herstellung derartiger Umsetzungsprodukte ist in US 4460761 (ausgegeben 17. Juli 1984, A. Schiller et al., Wacker-Chemie GmhB) eingehend beschrieben.

Beispiele für verstärkende anorganische Füllstoffe, also für anorganische Füllstoffe mit einer Oberfläche von mindestens 50 m²/g (bestimmt nach BET), sind insbesondere pyrogen erzeugte Siliciumdioxyde,unter Erhaltung der Struktur entwässerte Kieselsäurehydrogele und andere Arten von gefälltem Siliciumdioxyd mit einer BET-Oberfläche von mindestens 50 m²/g.

Beispiele für nicht-verstärkende anorganische Füllstoffe, also für anorganische Füllstoffe mit einer BET-Oberfläche von weniger als 50 m²/g, sind bzw. können sein Quarzmehl, Diatomeenerde, Eisenoxyd, Zinkoxyd, Titandioxyd, Calciumcarbonat, Magnesiumcarbonat, Zinkcarbonat, nicht-leitfähiger Ruß, Glimmer und Neuburger Kreide.

Alle diese verstärkenden und nicht-verstärkenden Füllstoffe können hydrophil oder wie Calciumcarbonat, das mit einem hydrophob-machendem Mittel, z.B. Stearinsäure, behandelt wurde, hydrophob sein.

Zur Bereitung der erfindungsgemäßen Massen können alle Bestandteile der jeweiligen Masse in beliebiger Reihenfolge miteinander vermischt werden. Dieses Vermischen erfolgt vorzugsweise bei Raumtemperatur. Falls erwünscht, kann dieses Vermischen aber auch bei höheren Temperaturen erfolgen, z.B. bei Temperaturen im Bereich von 35° C bis 135° C. Vorzugsweise wird bei diesem Vermischen der Zutritt von Wasser soweit wie möglich ausgeschlossen.

Für die Vernetzung der erfindungsgemäßen Massen reicht der übliche Wassergehalt der Luft aus. Die Vernetzung kann, falls erwünscht, auch bei höheren oder niedrigeren Temperaturen als Raumtemperatur, z.B. bei -5° bis 10° C oder bei 30° bis 50° C durchgeführt werden.

Die erfindungsgemäßen Massen können für alle Verwendungszwecke eingesetzt werden, für die unter Ausschluß von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtungsmassen für Fugen, einschließlich senkrecht verlaufender Fugen, und ähnlichen Leerräumen von z.B. 10 bis 40 mm lichter Weite, z.B. von Gebäuden, Land-, Wasser-und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß-oder Meerwasser ausgesetzte Oberflächen, oder das Gleiten verhindernden Überzügen, oder von gummielastischen Formkörpern sowie für die Isolierung von elektrischen oder elektronischen Vorrichtungen.

In den folgenden Beispielen und Beschreibungen der Herstellung von dabei verwendeten Silanen beziehen sich alle Angaben von Teilen und Prozentsätzen auf das Gewicht, soweit nichts anderes angegeben ist.

In den folgenden Beispielen werden Shore-A-Härte nach DIN (Deutsche Industrie Norm) 53505, Reißdehnung nach DIN 53504 mit Normstab S 3A und Reißdehnung ebenfalls nach DIN 53504 mit Normstab S 3A bestimmt.

Beispiel 1

42 Teile eines in den endständigen Einheiten je eine Si-gebundene Hydroxylgruppe aufweisenden Dimethylpolysiloxans mit einer Viskosität von 20 000 mPa • s bei 25° C werden in der angegebenen Reihenfolge mit 21 Teilen eines in den endständigen Einheiten je eine Si-gebundene Hydroxylgruppe aufweisenden Dimethylpolysiloxans mit einer Viskosität von 80 000 mPa • s bei 25° C, 20 Teilen eines durch Trimethylsiloxygruppen endblockierten Dimethylpolysiloxans mit einer Viskosität von 35 mPa • s, 5,2 Teilen des cyclischen Silans der Formel

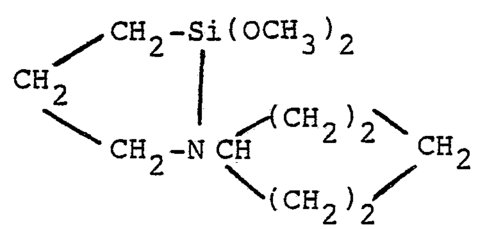,

12,6 Teilen eines pyrogen in der Gasphase erzeugten Siliciumdioxyds mit einer BET-Oberfläche von 150 $m^2/g$ und 0,2 Teilen eines Umsetzungsprodukts, das durch 6 Stunden Erwärmen eines Gemisches aus 4 Teilen Tetraethylsilikat und 1 Teil Di-n-butylzinndiacetat auf 120° C beim Druck der umgebenden Atmosphäre unter Rühren und gleichzeitigem Abdestillieren des entstandenen Essigsäurepropylesters hergestellt worden war, vermischt.

Die so erhaltene, durch Evakuieren von Gaseinschlüssen befreite Masse ist unter Ausschluß von Wasser lagerfähig. Bei Zutritt von Wasser vernetzt sie bei Raumtemperatur zu einem Elastomer.

Eine Probe (a) der zu einem Elastomeren vernetzbaren Masse, deren Herstellung oben beschrieben wurde, wird sofort nach ihrer Herstellung vernetzen gelassen. Dabei wird die Hautbildungszeit bei 50 % relativem Wassergehalt der Luft und 23° C bestimmt.

Eine weitere Probe (b) der Masse wird in einer luftdicht verschlossenen Aluminiumtube 3 Monate bei 50° C in einem Trockenschrank gelagert und erst dann vernetzen gelassen. Dabei wird ebenfalls die Hautbildungszeit unter den vorstehend angegebenen Bedingungen bestimmt. Mechanische Eigenschaften der so aus den Proben (a) und (b) erhaltenen Elastomeren werden bei 2 mm dicken Folien 14 Tage nach Beginn des Zutritts von Wasser enthaltender Luft zu der zum Elastomeren vernetzbaren Masse bestimmt. Die Ergebnisse sind in Tabelle 1 angegeben.

Tabelle 1

| Probe | Hautbildungszeit Minuten | Shore-A-Härte | Reißfestigkeit $N/mm^2$ | Reißdehnung % |
|---|---|---|---|---|
| a | 14 | 23 | 2,0 | 600 |
| b | 15 | 24 | 1,9 | 570 |

Wie aus den Werten in Tabelle 1 ersichtlich, verändern sich bei der Lagerung bei erhöhter Temperatur die Eigenschaften praktisch nicht.

Proben der zu einem Elastomeren vernetzbaren Masse, deren Herstellung oben beschrieben wurde, werden auf die in der folgenden Tabelle 2 angegebenen, vorher mit Lösungsmittel entfetteten Unterlagen strangförmig aufgetragen und dort 8 Tage bei 50 % relativem Wassergehalt der Luft und 23° C belassen. Dann wird die Haftfestigkeit der Elastomeren auf den Unterlagen, auf denen sie erzeugt wurden, geprüft. Die Ergebnisse sind in Tabelle 2 angegeben.

Tabelle 2

| Unterlage | Haftfestigkeit |
|---|---|
| Glas | + |
| Aluminium | + |
| Rostfreier Stahl ($V_2A$) | + |
| Hart- Polyvinylchlorid | Ø |
| Polyamid | + |

\+ = gute Haftung = Kohäsionsriß = Riß im Elastomeren
ϕ = mittlere Haftung = Kohäsionsriß und Adhäsionsriß = Riß im Elastomeren und Trennung von der Unterlage

Vergleichsversuch

Die im Beispiel 1 beschriebene Arbeitsweise wird wiederholt mit der Abänderung, daß anstelle der 5,2 Teile des cyclischen Silans 5,2 Teile des Silans der Formel

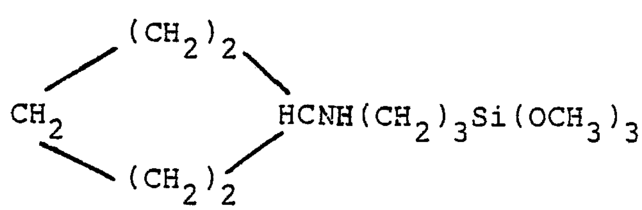

verwendet werden.

Bei Probe (a) werden die gleiche Hautbildungszeit und praktisch die gleichen Werte bei der Prüfung mechanischer Eigenschaften des Elastomers erhalten wie bei Probe (a) in Beispiel 1.

Bei Probe (b) ist jedoch bereits nach 1 Monat Lagerung bei 50° C keine meßbare Hautbildungszeit mehr vorhanden und 14 Tage nach Beginn des Zutritts von Wasser enthaltender Luft liegt immer noch kein Elastomer mit meßbaren physikalischen Eigenschaften vor.

Beispiel 2

(I) In einem Z-Kneter wird ein Gemisch aus 75 Teilen eines in den endständigen Einheiten je eine Si-gebundene Hydroxylgruppe aufweisenden Dimethylpolysiloxans mit einer Viskosität von 50 000 mPa•s bei 25° C, 5 Teilen Hexamethyldisilazan und 2,5 Teilen Wasser mit 20 Teilen des pyrogen in der Gas phase erzeugten Siliciumdioxyds mit einer Oberfläche von 150 $m^2/g$ bis zum Vorliegen einer homogenen Mischung verknetet. Danach wird die Mischung auf 120° C erwärmt, bei dieser Temperatur 5 Stunden lang geknetet und dann werden bei dieser Temperatur und 100 hPa (abs.) überschüssiges Hexamethyldisilazan und Wasser abdestilliert.

(II) 94,2 Teile der so erhaltenen Mischung mit einer Viskosität von 300 000 mPa $\times$ s bei 25° C werden mit 5,6 Teilen des cyclischen Silans der in Beispiel 1 angegebenen Formel und 0,2 Teilen des Umsetzungsprodukts von Tetraethylsilikat und Dibutylzinndiacetat, dessen Herstellung in Beispiel 1 beschrieben wurde, vermischt.

Die so erhaltene, durch Evakuieren von Gaseinschlüssen befreite Masse ist unter Ausschluß von Wasser lagerfähig. Bei Zutritt von Wasser vernetzt sie bei Raumtemperatur zu einem Elastomer.

Die Eigenschaften dieser Masse bzw. vom daraus hergestellten Elastomer werden, wie in Beispiel 1 angegeben, geprüft. Die Ergebnisse sind in Tabelle 3 angegeben.

Tabelle 3

| Probe | Hautbildungszeit Minuten | Shore-A-Härte | Reißfestigkeit $N/mm^2$ | Reißdehnung % |
|---|---|---|---|---|
| a | 12 | 21 | 3,3 | 720 |
| b | 13 | 23 | 3,0 | 630 |

Beispiel 3

94,2 Teile der Mischung deren Herstellung in Beispiel 2 unter (I) beschrieben wurde, werden mit 3,75 Teilen des cyclischen Silans der in Beispiel 1 angegebenen Formel, 1,9 Teilen Methyltrimethoxysilan und 0,15 Teilen des Umsetzungsprodukts von Tetraethylsilikat und Dibutylzinndiacetat, dessen Herstellung in Beispiel 1 beschrieben wurde, vermischt.

Die so erhaltene, durch Evakuieren von Lufteinschlüssen befreite Masse ist unter Ausschluß von Wasser lagerfähig. Bei Zutritt von Wasser vernetzt sie bei Raumtemperatur zu einem Elastomer.

Die Eigenschaften dieser Masse bzw. von daraus hergestelltem Elastomer werden, wie in Beispiel 1 angegeben, geprüft. Die Ergebnisse sind in Tabelle 4 angegeben.

Tabelle 4

| Probe | Hautbildungszeit Minuten | Shore-A-Härte | Reißfestigkeit $N/mm^2$ | Reißdehnung % |
|---|---|---|---|---|
| a | 16 | 31 | 4,8 | 800 |
| b | 19 | 33 | 5,2 | 840 |

Beispiel 4

47,6 Teile des in den endständigen Einheiten je eine Si-gebundene Hydroxylgruppe aufweisenden Dimethylpolysiloxans mit einer Viskosität von 20 000 mPa • s bei 25° C werden in der angegebenen Reihenfolge mit 47,6 Teilen Quarzmehl 4,65 Teilen des cyclischen Silans der in Beispiel 1 angegebenen Formel und 0,15 Teilen des Umsetzungsprodukts von Tetraethylsilikat und Dibutylzinndiacetat, dessen Herstellung in Beispiel 1 beschrieben wurde, vermischt.

Die so erhaltene, durch Evakuieren von Gaseinschlüssen befreite Masse ist unter Ausschluß von Wasser lagerfähig. Bei Zutritt von Wasser vernetzt sie bei Raumtemperatur zu einem Elastomer.

Die Eigenschaften dieser Masse bzw. von daraus hergestelltem Elastomer werden, wie in Beispiel 1 angegeben, geprüft. Die Ergebnisse sind in Tabelle 5 angegeben.

Tabelle 5

| Probe | Hautbildungszeit Minuten | Shore-A-Härte | Reißfestigkeit $N/mm^2$ | Reißdehnung % |
|---|---|---|---|---|
| a | 5 | 45 | 1,9 | 190 |
| b | 7 | 44 | 1,8 | 190 |

Das cyclische Silan der in Beispiel 1 angegebenen Formel ist wie folgt erhältlich:
Das Silan der Formel

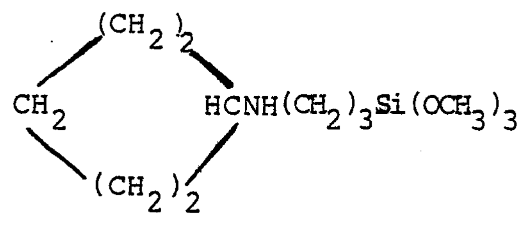

wird beim Druck der angegebenen Atmosphäre (etwa 1020 hPa/abs.) zum Sieden erhitzt, wobei das dabei gebildete Methanol abdestilliert wird. Die fraktionierte Destillation des Rückstands bei etwa 1 hPa (abs.) ergibt das cyclische Silan der in Beispiel 1 angegebenen Formel mit folgenden physikalischen Kennzahlen:

Siedepunkt bei 1 hPa (abs.): 93° C
Dichte bei 25° C: 1,01 $g/cm^3$
Brechungsindex $n_D^{25}$ : 1,467
Viskosität bei 25° C : 4,8 $mm^2 \bullet s^{-1}$

Das Silan der Formel

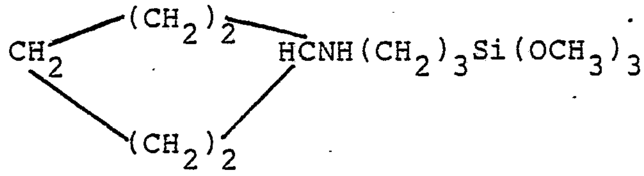

ist wie folgt erhältlich:

Ein Gemisch aus 1 Teil 3-Chlorpropyltrimethoxysilan und 5 Teilen Cyclohexylamin wird 5 Stunden zum Sieden unter Rückfluß erwärmt. Nach dem Abkühlen des so erhaltenen Gemisches auf Raumtemperatur wird vom Aminhydrochlorid abfiltriert und überschüssiges Cyclohexylamin abdestilliert. Der Rückstand wird bei 2 hPa (abs.) destilliert. Bei 125° C wird 3-Cyclohexylaminopropyltrimethoxysilan, also das Silan der vorstehend angegebenen Formel, mit dem Brechungsindex $n_D^{25}$ von 1,449 erhalten.

## Ansprüche

1. Unter Ausschluß von Wasser lagerfähige, bei Zutritt von Wasser bei Raumtemperatur zu Elastomeren vernetzende Massen, die durch Vermischen von in den endständigen Einheiten je eine Si-gebundene Hydroxylgruppe aufweisendem Diorganopolysiloxan mit Silan, an dessen Siliciumatom Stickstoff, zwei einwertige Kohlenwasserstoffreste, die durch eine Alkoxygruppe substituiert sein können, über Sauerstoff und über Kohlenstoff ein Kohlenwasserstoffrest gebunden sind, sowie gegebenenfalls mindestens einem weiteren Stoff hergestellt worden sind, **dadurch gekennzeichnet**, daß als Silan der vorstehend definierten Art cyclisches Silan der Formel

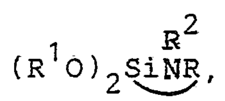

worin R einen zweiwertigen Kohlenwasserstoffrest, $R^1$ gleiche oder verschiedene,einwertige Kohlenwasserstoffreste, die durch eine Alkoxygruppe substituiert sein können, und $R^2$ Wasserstoff, einen Alkyl-oder Aminoalkylrest bedeutet, verwendet worden ist.

2. Massen nach Anspruch 1, **dadurch gekennzeichnet**, daß als cyclisches Silan solches der Formel

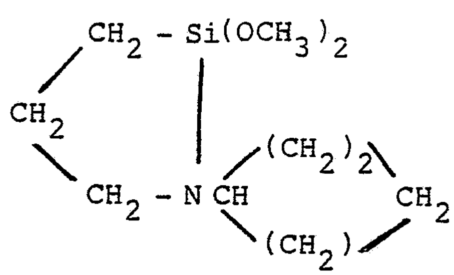

verwendet worden ist.

3. Massen nach Anspruch 1 oder 2, **dadurch gekennzeichnet**, daß das cyclische Silan in Mengen von 2 bis 20 Gew.-%, bezogen auf das Gesamtgewicht der jeweiligen Masse, verwendet worden ist.